# EUROPEAN PATENT APPLICATION

(11) **EP 2 085 414 A1**
(43) Date of publication of application: **05.08.2009**
(21) Application number: 07832198.1
(22) Date of filing: 20.11.2007
(51) Int. Cl.: C08G 18/63, C08G 101/00

(54) **METHOD FOR PRODUCING HARD POLYURETHANE FOAM**

(30) Priority: 20.11.2006 JP 2006312814
(71) Applicant: Asahi Glass Company, Limited, Chiyoda-ku Tokyo 100-8405 (JP)
(72) Inventor: WADA, Hiroshi, Kamisu-city Ibaraki 3140195 (JP); SATO, Hisashi, Kamisu-city Ibaraki 3140195 (JP); YASUDA, Teruhiko, Kamisu-city Ibaraki 3140195 (JP); ADACHI, Yasuhito, Kamisu-city Ibaraki 3140195 (JP); SHIMIZU, Katsuhiko, Kamisu-city Ibaraki 3140195 (JP)
(74) Representative: Hartz, Nikolai
(86) International application number: PCT/JP2007/072468
(87) International publication number: WO 2008/062794

(57) **Abstract**

To provide a method for producing a rigid polyurethane foam, whereby it is possible to obtain a rigid polyurethane foam which has a low density and good dimensional stability, and when a mixture of a polymer-dispersed polyol and a polyol for a rigid polyurethane foam to be used, is stored, the mixture is excellent in storage stability, so that a rigid polyurethane foam can be produced constantly.

A method for producing a rigid polyurethane foam, which comprises reacting a polyol component (Z) with a polyisocyanate component in the presence of a blowing agent, a surfactant and a catalyst, wherein the polyol component (Z) has an average hydroxyl value of from 200 to 800 mgKOH/g and contains a polymer-dispersed polyol (A) having polymer particles dispersed in a polyol by polymerizing a monomer having a polymerizable unsaturated group in a polyol (X), wherein the polyol (X) contains a polyether polyol, and the monomer having a polymerizable unsaturated group contains a fluorinated acrylate or a fluorinated methacrylate, and styrene.

## Description

### TECHNICAL FIELD

The present invention relates to a method for producing a rigid polyurethane foam.

### BACKGROUND ART

A rigid foamed synthetic resin (such as a rigid polyurethane foam which may be hereinafter referred to also as "a rigid foam") produced by reacting a polyol component with a polyisocyanate component in the presence of a blowing agent, etc., is widely used.

As a blowing agent to be used for such a rigid foam, a hydrofluorocarbon compound or a hydrocarbon compound having a low boiling point is mainly used.

With respect to a rigid foam represented by e.g. a board-stock foam, further density reduction of the foam is desired in order to reduce the cost or the weight by reducing the amount of the raw material to be used. However, there is a problem such that along with the density reduction of a foam, the strength of the foam tends to decrease, and the rigid foam is likely to undergo shrinkage.

Further, with respect to a blowing agent, in consideration of a load to the environment, it has been studied to reduce a low boiling point hydrofluorocarbon compound and increase water, or in consideration of the flammability, it has been studied to reduce a hydrocarbon compound and increase water, or a technique has been studied to use only water without using a low boiling point hydrofluorocarbon compound or hydrocarbon compound.

However, in a case where density reduction of a foam is attempted by combining water with a hydrofluorocarbon compound or hydrocarbon compound, or density reduction of a foam is attempted by water-foaming by carrying out foaming by means of only water, the foam tends to be remarkably susceptible to shrinkage, thus leading to deterioration in dimensional stability of the foam.

In order to secure the dimensional stability of a foam, it is usually conceivable to increase the density of the foam thereby to increase the strength of the foam. However, in the method of increasing the density of the foam, the amount of the raw material to be used increases, thus leading to an increase in cost.

That is, a rigid foam is desired to have a low density and good dimensional stability when water is used as a blowing agent in a large amount or when foaming is carried out by water alone.

Heretofore, a method of using a fluorinated compound such as polytetrafluoroethylene (PTFE) has been proposed as prior art to improve the dimensional stability by preventing shrinkage of a rigid polyurethane foam (Patent Documents 1 and 2). According to the method disclosed in Patent Documents 1 and 2, by addition of PTFE having a small particle size, fine pores may be formed in the foam, whereby the dimensional stability will be improved.

Further, a method of incorporating a polymer-dispersed polyol to a polyol component is proposed (Patent Documents 3 and 4).

Here, "the polymer-dispersed polyol" is a polyol having polymer particles dispersed in a polyol such as a polyether polyol or a polyester polyol.

Such a polymer-dispersed polyol has heretofore been used to improve the dimensional stability of a flexible foam or semi-rigid foam.

As a typical example of the method for producing a polymer-dispersed polyol, the following method is known. That is, it is a method of carrying out polymerization of a monomer having a polymerizable unsaturated group in a saturated polyol having no polymerizable unsaturated bond, if required, under such a condition that an unsaturated polyol having a polymerizable unsaturated bond is also present, followed by removing an unreacted component. As such a saturated polyol or unsaturated polyol, various polyether polyols or polyester polyols are known.
Patent Document 1: EP0224945
Patent Document 2: JP-A-8-503720
Patent Document 3: JP-A-57-25313
Patent Document 4: JP-A-11-302340

### DISCLOSURE OF THE INVENTION

### PROBLEMS TO BE SOLVED BY THE INVENTION

However, a fluorinated compound to be used, for example, in the method disclosed in Patent Documents 1 and 2, is usually poor in its solubility in an organic substance, and it has been found that when a fluorinated compound such as PTFE is stored as added to a polyol compound, the storage stability is inadequate, as the fluorinated compound and the polyol compound will be separated, and it tends to be difficult to produce a rigid polyurethane foam constantly.

Further, it has been found that the polymer-dispersed polyol to be used in the method disclosed in Patent Document 3 or 4 is poor in the storage stability when mixed with a polyol for rigid polyurethane foams having a small molecular weight, whereby it is difficult to produce a rigid polyurethane foam stably.

Accordingly, it is an object of the present invention to provide a method for producing a rigid polyurethane foam, whereby it is possible to obtain a rigid polyurethane foam which has a low density and is excellent in dimensional stability, and when a mixture of a polymer-dispersed polyol and a polyol for rigid polyurethane foams, to be used, is stored, the mixture is excellent in storage stability, and thus it is possible to produce the rigid polyurethane foam stably.

Here, "the storage stability" in the present invention means a characteristic such that when a mixture of the polymer-dispersed polyol and a polyol for rigid polyurethane foams, is stored, the uniformity of the mixture can be maintained. In a case where the storage stability is poor, it becomes difficult to obtain a rigid polyurethane foam having a stabilized quality, i.e. the polymer particles will be separated from the polyol compound, or in the mixture, the polymer-dispersed polyol will migrate to make the composition non-uniform.

### MEANS TO SOLVE THE PROBLEMS

The present invention provides a method for producing a rigid polyurethane foam, which comprises reacting a polyol component (Z) with a polyisocyanate component in the presence of a blowing agent, a surfactant and a catalyst, wherein the polyol component (Z) has an average hydroxyl value of from 200 to 800 mgKOH/g and contains the following polymer-dispersed polyol (A):

Polymer-dispersed polyol (A) being one having polymer particles dispersed in a polyol by polymerizing a monomer having a polymerizable unsaturated group in a polyol (X), wherein the polyol (X) contains a polyether polyol, and the monomer having a polymerizable unsaturated group contains a fluorinated acrylate or a fluorinated methacrylate, and styrene.

In the method for producing a rigid polyurethane foam of the present invention, it is preferred that the fluorinated acrylate or the fluorinated methacrylate is a monomer represented by the following formula (1): 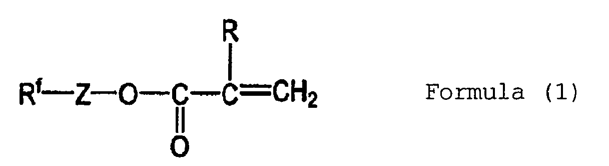 wherein R^{f} is a C₁₋₁₈ polyfluoroalkyl group, R is a hydrogen atom or a methyl group, and Z is a bivalent linking group.

Further, in the method for producing a rigid polyurethane foam of the present invention, it is preferred that the proportion of styrene in the entire monomer having a polymerizable unsaturated group is from 30 to 70 mass%.

Further, in the method for producing a rigid polyurethane foam of the present invention, it is preferred that the polyether polyol has an oxyethylene content of at least 10 mass%.

Further, in the method for producing a rigid polyurethane foam of the present invention, it is preferred that the polyether polyol has a hydroxyl value of at most 84 mgKOH/g.

Further, in the method for producing a rigid polyurethane foam of the present invention, it is preferred that the polyether polyol is a polyoxyalkylene polyol obtained by addition-polymerizing propylene oxide and ethylene oxide to a polyhydric alcohol.

Further, in the method for producing a rigid polyurethane foam of the present invention, it is preferred that the proportion of the monomer represented by the formula (1) in the entire monomer having a polymerizable unsaturated group, is from 30 to 70 mass%.

Further, in the method for producing a rigid polyurethane foam of the present invention, it is preferred that the proportion of the polymer-dispersed polyol (A) in the polyol component (Z) is at least 0.01 mass%, and the proportion of the polymer particles in the polyol component (Z) is at least 0.0005 mass%.

Further, in the method for producing a rigid polyurethane foam of the present invention, it is preferred that as the blowing agent, water alone, or water and at least one member selected from the group consisting of a hydrofluorocarbon compound and a hydrocarbon compound, are used.

### EFFECTS OF THE INVENTION

By the method for producing a rigid polyurethane foam of the present invention, it is possible to produce a rigid polyurethane foam which has a low density and is excellent in dimensional stability. Further, when a mixture of a polymer-dispersed polyol and a polyol for rigid polyurethane foams is stored, it is excellent in storage stability, and it is therefore possible to produce a rigid polyurethane foam stably.

### BEST MODE FOR CARRYING OUT THE INVENTION METHOD FOR PRODUCING RIGID POLYURETHANE FOAM

The method for producing a rigid polyurethane foam of the present invention is a method for producing a rigid polyurethane foam, which comprises reacting a polyol component (Z) with a polyisocyanate component in the presence of a blowing agent, a surfactant and a catalyst.

Now, the respective components will be described in detail.

### POLYOL COMPONENT (Z)

In the present invention, the polyol component (Z) contains the above mentioned specific polymer-dispersed polyol (A).

As a component other than the polymer-dispersed polyol (A) in the polyol component (Z), it is possible to use, for example, a polyol which is commonly used for the production of rigid polyurethane foams (which is in this specification referred to as "a polyol for rigid polyurethane foams") such as a polyether polyol, a polyester polyol or a hydrocarbon polymer having hydroxyl groups at its terminals.

The polyol for rigid polyurethane foams preferably has from 2 to 8 functional groups on average.

Here, the number of functional groups means the number of functional groups (hydroxyl groups) in the polymer to be reacted with the polyisocyanate component. For example, in the case of a polyether polyol, it is equal to the active hydrogen number in the initiator used for the preparation of the polyether polyol.

The polyol for rigid polyurethane foams may specifically be the same one as exemplified with respect to the polyol (X) which will be hereinafter described with respect to the polymer-dispersed polyol (A).

The average hydroxyl value of the polyol component (Z) is from 200 to 800 mgKOH/g, preferably from 250 to 600 mgKOH/g, more preferably from 300 to 500 mgKOH/g. When the average hydroxyl value is at least 200 mgKOH/g, the high-strength rigid polyurethane foam is readily attainable, such being desirable. When the average hydroxyl value is at most 800 mgKOH/g, the obtainable rigid polyurethane foam is less likely to be brittle, such being desirable.

In the present invention, the average hydroxyl value means an average value of hydroxyl values of all polyol compounds constituting the polyol component (Z).

### POLYMER-DISPERSED POLYOL (A)

The polymer-dispersed polyol (A) in the present invention is one having polymer particles dispersed in a polyol, by polymerizing a monomer having a polymerizable unsaturated group in a polyol (X), wherein the polyol (X) contains a polyether polyol, and the monomer having a polymerizable unsaturated group contains a fluorinated acrylate or a fluorinated methacrylate and styrene.

As the polyol component (Z) contains the polymer-dispersed polyol (A), it is possible to obtain a rigid polyurethane foam having good dimensional stability. Further, the polymer-dispersed polyol (A) has high compatibility with the polyol for rigid polyurethane foams, and when their mixture is stored, the mixture is excellent in the storage stability, and thus, it is possible to produce a rigid polyurethane foam stably.

In the present invention, "in a polyol (X)" may be in a polyol (X) alone or in a mixture of a polyol (X) and a solvent exemplified in the following description with respect to "Method for producing polymer-dispersed polyol (A)".

### POLYOL (X)

In the polymer-dispersed polyol (A), as the polyol (X), it is possible to use e.g. a polyether polyol, a polyester polyol or a hydrocarbon polymer having hydroxyl groups at its terminals.

However, in the present invention, the polyol (X) contains at least a polyether polyol. As it contains a polyether polyol, the compatibility between the polymer-dispersed polyol and the polyol for rigid polyurethane foams will be increased, whereby the storage stability will be improved.

As the polyether polyol, it is possible to use one obtained by addition-polymerizing a cyclic ether such as an alkylene oxide to an initiator such as an amine or a polyhydroxy compound such as a polyhydric alcohol or a polyhydric phenol.

The initiator may specifically be a polyhydric alcohol such as ethylene glycol, diethylene glycol, propylene glycol, dipropylene glycol, neopentyl glycol, 3-methyl-1,5-pentanediol, 1,4-butanediol, 1,6-hexanediol, water, glycerin, trimethylolpropane, 1,2,6-hexanetriol, pentaerythritol, diglycerin, tetramethylolcyclohexane, methyl glucoside, sorbitol, mannitol, dulcitol, sucrose or triethanolamine; a polyhydric phenol such as bisphenol A, or an initial condensate of phenol/formaldehyde; an amino compound such as piperazine, aniline, monoethanolamine, diethanolamine, isopropanolamine, aminoethylethanolamine, ammonia, aminomethylpiperazine, aminoethylpiperazine, ethylenediamine, propylenediamine, hexamethylenediamine, tolylenediamine, xylylenediamine, diphenylmethanediamine, diethylenetriamine or triethylenetetramine, or a cyclic ether addition product thereof.

Such initiators may be used alone or in combination as a mixture of two or more of them.

As the cyclic ether, it is possible to use, for example, a 3- to 6-membered cyclic ether compound having one oxygen atom in the ring.

Such a cyclic ether may specifically be a compound having a 3-membered cyclic ether group (monoepoxide) such as ethylene oxide, propylene oxide, isobutylene oxide, 1-butene oxide, 2-butene oxide, trimethylethylene oxide, tetramethylethylene oxide, butadiene monooxide, styrene oxide, α-methylstyrene oxide, epichlorohydrin, epifluorohydrin, epibromohydrin, glycidol, butyl glycidyl ether, hexyl glycidyl ether, phenyl glycidyl ether, 2-chloroethyl glycidyl ether, o-chlorophenyl glycidyl ether, ethylene glycol diglycidyl ether, bisphenol A diglycidyl ether, cyclohexene oxide, dihydronaphthalene oxide or vinyl cyclohexene monooxide; or a compound having a 4- to 6-membered cyclic ether group, such as oxetane, tetrahydrofuran or tetrahydropyran.

Among them, a compound having a 3-membered cyclic ether group (monoepoxide) is preferred, and a C₂₋₄ alkylene oxide is more preferred. Ethylene oxide, propylene oxide, isobutylene oxide, 1-butene oxide or 2-butene oxide is further preferred, and ethylene oxide or propylene oxide is particularly preferred.

Such cyclic ethers may be used alone or in combination as a mixture of two or more of them.

In a case where two or more cyclic ethers are to be used in combination, such cyclic ethers are preferably C₂₋₄ alkylene oxides, and a combination of propylene oxide and ethylene oxide is most preferred. In such a case, the mixture of two or more cyclic ethers may be addition-polymerized to the above mentioned initiator, or two or more cyclic ethers may be sequentially addition-polymerized.

The polyether polyol preferably has an oxyethylene group content of at least 10 mass%, more preferably at least 30 mass%, further preferably at least 40 mass%, particularly preferably at least 55 mass%, most preferably at least 60 mass%, in the polyether polyol. Further, the oxyethylene group content is preferably at most 90 mass%.

When the oxyethylene group content is at least 10 mass%, it will be possible to readily obtain a polymer-dispersed polyol (A) wherein the polymer particles are stably dispersed, and the storage stability will be improved. Particularly when the oxyethylene group content is at least 60 mass%, the storage stability will be good for a longer period (for example a period of one month).

In the present invention, "the oxyethylene group content" is the proportion of oxyethylene groups in the polyol compound.

Further, the polyether polyol preferably has a hydroxyl value of at most 84 mgKOH/g, more preferably at most 67 mgKOH/g, particularly preferably at most 60 mgKOH/g. The lower limit value for such a hydroxyl value is preferably at least 5 mgKOH/g, more preferably at least 8 mgKOH/g, particularly preferably at least 20 mgKOH/g, most preferably at least 30 mgKOH/g. When the hydroxyl value is at most 84 mgKOH/g, the storage stability can be made good even with a low viscosity, and when it is at least 5 mgKOH/g, the storage stability will be good, such being desirable.

When the hydroxyl value of the polyether polyol is at most 84 mgKOH/g, the oxyethylene group content in the polyether polyol becomes substantially equal to the oxyethylene group content based on the total of oxyalkylene groups in the polyether polyol.

Further, the polyether polyol is preferably one obtained by using a polyhydric alcohol as an initiator and addition-polymerizing ethylene oxide, or ethylene oxide and another cyclic ether therewith.

As the polyhydric alcohol, for example, glycerin, trimethylolpropane or 1,2,6-hexanetriol is preferred.

As another cyclic ether, for example, propylene oxide, isobutylene oxide, 1-butene oxide or 2-butene oxide is preferred, and propylene oxide is particularly preferred.

Especially, the polyether polyol is preferably a polyoxyalkylene polyol obtained by addition-polymerizing propylene oxide and ethylene oxide to a polyhydric alcohol. When it is such a polyoxyalkylene polyol, it becomes possible to more readily obtain a polymer-dispersed polyol (A) wherein polymer particles are dispersed more stably, and the storage stability will be more improved.

As the polyester polyol, it is possible to use, for example, a polyester polyol obtained by polycondensation of a polyhydric alcohol with a polyvalent carboxylic acid. As other examples, polyester polyols may be mentioned which are obtainable by, for example, polycondensation of a hydroxy carboxylic acid, polymerization of a cyclic ester (lactone), poly-addition of a cyclic ether to a polycarboxylic anhydride, and an ester-exchange reaction of a waste polyethylene terephthalate.

As the hydrocarbon polymer having hydroxyl groups at its terminals, it is possible to use, for example, polytetramethylene glycol (PTMG) or polybutadiene polyol.

In the present invention, the polyol (X) contains at least the above polyether polyol and may further contain, in addition to the polyether polyol, a polyester polyol, a hydrocarbon polymer having hydroxyl groups at its terminals, etc.

The content of the polyether polyol in the polyol (X) is preferably at least 50 mass%, more preferably at least 80 mass%, most preferably 100 mass%. When the content is at least 50 mass% and most preferably 100 mass%, it is possible to readily obtain a polymer-dispersed polyol (A) wherein the polymer particles are stably dispersed, and the storage stability will be improved.

### MONOMER HAVING POLYMERIZABLE UNSATURATED GROUP

In the present invention, the monomer having a polymerizable unsaturated group contains a fluorinated acrylate or a fluorinated methacrylate (hereinafter sometimes referred to as "a fluorinated monomer"), and styrene.

As such a fluorinated monomer is contained, the dispersion stability of polymer particles in the polyol (A) will be primarily good. Further, the compatibility of the polymer-dispersed polyol (A) to be used, with the polyol for rigid polyurethane foams will be increased, whereby the storage stability will be improved, and it becomes possible to readily produce a rigid polyurethane foam stably.

Further, as styrene is contained, the cell opening effect will increase, and when it is formed into a rigid polyurethane foam, the dimensional stability will primarily be improved.

In the present invention, the fluorinated monomer is preferably a monomer represented by the above formula (1), since the compatibility with the polyol (X) is high.

In the above formula (1), R^{f} is a C₁₋₁₈ polyfluoroalkyl group. In R^{f}, the number of carbon atoms is from 1 to 18, preferably from 1 to 10, more preferably from 3 to 8.

R^{f} is preferably such that the proportion of fluorine atoms in the alkyl group (the proportion of the number of hydrogen atoms substituted by fluorine atoms in the alkyl group) is preferably at least 80%, and it is preferred that all hydrogen atoms are substituted by fluorine atoms. When the number of carbon atoms is at most 18, the stability of a foam will be good at the time of foaming in the production of a rigid polyurethane foam.

R is a hydrogen atom or a methyl group. Namely, the monomer represented by the above formula (1) is an acrylate when R is a hydrogen atom, and it is a methacrylate when R is a methyl group.

Z is a bivalent linking group and may, for example, be an alkylene group or an arylene group, preferably an alkylene group. The alkylene group is preferably a C₁₋₁₀ alkylene group, particularly preferably a C₁₋₅ alkylene group, and it may be linear or branched.

Specific examples of the monomer represented by the above formula (1) will be shown below.

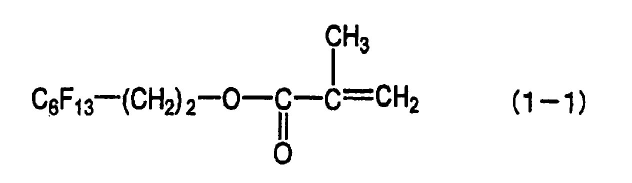

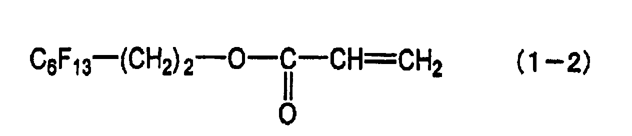

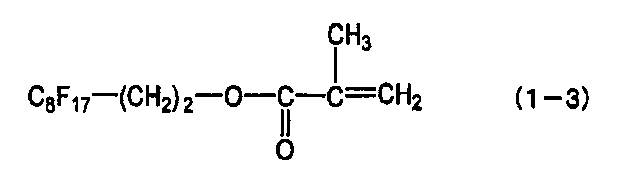

Such fluorinated monomers may be used alone or in combination as a mixture of two or more of them.

The amount of the fluorinated monomer to be used, is preferably from 1 to 99 mass%, more preferably from 30 to 70 mass%, based on the entire monomer having a polymerizable unsaturated group.

Particularly, the proportion of the monomer represented by the above formula (1) in the entire monomer having a polymerizable unsaturated group is preferably from 1 to 99 mass%, more preferably from 30 to 70 mass%.

When the amount is at least the lower limit value, particularly at least 30 mass%, the storage stability will be further improved. Particularly, when it is formed into a rigid polyurethane foam, the heat-insulating properties will be improved. On the other hand, when the amount is at most the upper limit value, particularly at most 70 mass%, a balance can be taken with another monomer having a polymerizable unsaturated group.

The proportion of styrene in the entire monomer having a polymerizable unsaturated group is preferably from 1 to 70 mass%, more preferably from 30 to 70 mass%, most preferably from 40 to 60 mass%.

When the amount is at least the lower limit value, particularly at least 30 mass%, good dimensional stability can be obtained when formed into a rigid polyurethane foam. On the other hand, when the amount is at most the upper limit value, particularly at most 70 mass%, a balance can be taken with another monomer having a polymerizable unsaturated group.

Further, the blend ratio of the fluorinated monomer to styrene is preferably from 1:99 to 99:1, more preferably from 30:70 to 70:30, most preferably 50:50, by mass ratio. In such a blend ratio, when the proportion of styrene is at least the lower limit value, the dimensional stability will be more improved as formed into a rigid polyurethane foam. On the other hand, when the proportion of styrene is at most the upper limit value, the storage stability will be more improved.

In the present invention, the monomer having a polymerizable unsaturated group which may be used in combination with the fluorinated monomer and styrene, may, for example, be a cyano group-containing monomer such as acrylonitrile, methacrylonitrile or 2,4-dicyanobutene-1; a styrene monomer such as α-methylstyrene or a halogenated styrene; an acrylic monomer such as acrylic acid, methacrylic acid or an alkyl ester thererof, an acrylamide or methacrylamide; a vinyl ester monomer such as vinyl acetate or vinyl propionate; a diene monomer such as isoprene, butadiene or another diene; an unsaturated fatty acid ester such as maleic acid diester or itaconic acid diester; a vinyl halide such as vinyl chloride, vinyl bromide or vinyl fluoride; a vinylidene halide such as vinylidene chloride, vinylidene bromide or vinylidene fluoride; a vinyl ether monomer such as methyl vinyl ether, ethyl vinyl ether or isopropyl vinyl ether; or another olefin, a halogenated olefin or a macromonomer. Among them, acrylonitrile, vinyl acetate or a macromonomer is preferred, and acrylonitrile is particularly preferred, since storage stability for a longer period (for example a period of one month) will be good. Further, it is also preferred to use a macromonomer, since the storage stability will be good.

"A macromonomer" means a low molecular weight polymer or oligomer having a radical polymerizable unsaturated group at one terminal.

Such monomers other than the fluorinated monomer and styrene may be used alone or in combination as a mixture of two or more of them.

The polymer particles in the present invention are made of a copolymer having constituting units derived from the fluorinated monomer and constituting units derived from styrene.

Such a copolymer may, preferably be a copolymer comprising constituting units derived from the fluorinated monomer and constituting units derived from styrene; or a copolymer comprising constituting units derived from the fluorinated monomer, constituting units derived from styrene and a macromonomer.

The above "constituting units" means monomer units constituting the polymer.

### POLYISOCYANATE COMPONENT

The polyisocyanate component in the present invention is not particularly limited, and it may, for example, be an aromatic, alicyclic or aliphatic polyisocyanate having at least two isocyanate groups; a mixture of at least two such polyisocyanates; or a modified polyisocyanate obtained by modifying such a polyisocyanate. A specific example may be a polyisocyanate such as tolylene diisocyanate (TDI), diphenylmethane diisocyanate (MDI), polymethylene polyphenyl isocyanate (so-called crude MDI), xylylene diisocyanate (XDI), isophorone diisocyanate (IPDI) or hexamethylene diisocyanate (HMDI), or its prepolymer type modified product; or an isocyanaurate modified product, a urea modified product or a carbodiimide modified product. Among them, TDI, MDI, crude MDI or a modified product thereof, is preferred.

Such polyisocyanate components may be used alone or in combination as a mixture of two or more of them.

### BLOWING AGENT

As the blowing agent in the present invention, water is mainly employed. As a blowing agent other than water, a hydrofluorocarbon compound, a hydrocarbon compound or a commonly employed gas may, for example, be used in combination.

The hydrofluorocarbon compound may specifically be, for example, 1,1,1,2-tetrafluoroethane (HFC-134a), 1,1,1,3,3-pentafluoropropane (HFC-245fa), 1,1,1,3,3-pentafluorobutane (HFC-365mfc), 1,1,2,2-tetrafluoroethyl difluoromethyl ether (HFE-236pc), 1,1,2,2-tetrafluoroethyl methyl ether (HFE-254pc) or 1,1,1,2,2,3,3-heptafluoropropyl methyl ether (HFE-347 mcc).

The hydrocarbon compound may specifically be, for example, butane, n-pentane, isopentane, cyclopentane, hexane or cyclohexane.

The commonly employed gas may, for example, be air, nitrogen or carbon dioxide gas. Among them, carbon dioxide gas is preferred. An added state of an inert gas may be any one of a liquid state, a supercritical state or a subcritical state.

Such blowing agents may be used alone or in combination as a mixture of two or more of them.

In the present invention, it is preferred to use, as the blowing agent, water alone, or a combination of water and at least one member selected from hydrofluorocarbon compounds and hydrocarbon compounds. It is thereby possible to improve the foaming effect and to reduce the weight of the rigid polyurethane foam.

### SURFACTANT

The surfactant in the present invention is not particularly limited, and for example, a silicone surfactant may be mentioned as preferred. Particularly preferred is a silicone surfactant having a high foam stabilizing effect capable of reducing the cell diameter, in order to provide heat-insulating properties to the rigid polyurethane foam.

Such surfactants may be used alone or in combination as a mixture of two or more of them.

### CATALYST

The catalyst in the present invention is not particularly limited so long as it is a catalyst to promote the urethane-foaming reaction.

The catalyst to promote the urethane-foaming reaction may, for example, be a tertiary amine such as triethylene diamine, bis(2-dimethylaminoethyl) ether or N,N,N',N'-tetramethylhexamethylene diamine; or an organic metal compound such as dibutyltin dilaurate.

Further, a catalyst to promote the trimerization reaction of an isocyanate group may be used in combination, and it may, for example, be a metal salt of a carboxylic acid such as potassium acetate or potassium 2-ethylhexanoate.

Further, in a case where spray foaming is to be employed as a method for producing a rigid foam, it is preferred to use an organic metal catalyst such as lead 2-ethylhexanoate in combination, in order to complete the reaction in a short time.

### OTHER ADDITIVES

In the present invention, optional additives may be used as the case requires.

The additives may, for example, be a filler such as calcium carbonate or barium sulfate; an anti-aging agent such as an antioxidant or an ultraviolet stabilizer; a flame retardant, a plasticizer, a colorant, an antifungal agent, a cell opener, a dispersing agent, a discoloration preventing agent, etc.

### METHOD FOR PRODUCING RIGID POLYURETHANE FOAM

The present invention provides a method for producing a rigid polyurethane foam, which comprises reacting a polyol component (Z) with a polyisocyanate component in the presence of a blowing agent, a surfactant and a catalyst.

At the time of the production, it is preferred that preliminarily the polyol component (Z) is prepared, and a mixture (hereinafter referred to as a polyol system liquid) of the polyol component (Z) and some or all other than the polyisocyanate component, is prepared.

Here, the blowing agent may preliminarily be blended to the polyol system liquid or may be blended after mixing the polyisocyanate component to the polyol system liquid. It is particularly preferred to preliminarily blend it to the polyol system liquid.

The polyol component (Z) may, for example, be prepared by mixing the polymer-dispersed polyol (A) and the polyol for rigid polyurethane foams.

The method for producing the polymer-dispersed polyol (A) is not particularly limited so long as it is a method which comprises polymerizing a monomer having a polymerizable unsaturated group in a polyol (X) to produce a polymer-dispersed polyol having polymer particles formed by polymerization of the monomer dispersed in the polyol. For example, since the dispersion stability of polymer particles in the polyol (X) is good, a preferred method may be a method which comprises a polymerizing a monomer having a polymerizable unsaturated group in the polyol (X) in the presence of a solvent, as the case requires, to let polymer particles extract directly thereby to obtain a polymer-dispersed polyol.

Specifically, the following methods (1) and (2) may, for example, be mentioned as the method for producing a polymer-dispersed polyol (A).
(1) A batch method wherein a part of the polyol (X) is charged into a reactor, and a mixture comprising the rest of the polyol (X), the monomer having a polymerizable unsaturated group, the polymerization initiator, etc. is gradually fed into the reactor with stirring to carry out the polymerization.
(2) A continuous method wherein a mixture comprising the polyol (X), the monomer having a polymerizable unsaturated group, the polymerization initiator, etc., is continuously fed into a reactor with stirring to carry out the polymerization and at the same time, a formed polymer-dispersed polyol is continuously discharged from the reactor.

In the present invention, either method (1) or (2) may be employed.

In the present invention, the amount of the entire monomer having a polymerizable unsaturated group to be used is not particularly limited, but it is preferably such an amount that the concentration of polymer particles in the polymer-dispersed polyol (A) would be at most 50 mass%, more preferably such an amount that the concentration of polymer particles would be from 1 to 50 mass%, particularly preferably such an amount that the concentration of polymer particles would be from 2 to 45 mass%, most preferably such an amount that the concentration of polymer particles would be from 5 to 30 mass%. When the concentration of polymer particles is at most 50 mass%, it will be possible to more readily obtain a polymer-dispersed polyol (A) wherein polymer particles are stably dispersed in the polyol (X), and the storage stability will be more improved. Further, a proper viscosity will be obtained, and the solution stability of the polymer-dispersed polyol (A) will be improved.

In the method for producing a polymer-dispersed polyol (A), as the polymerization initiator, it is common to use one to form a radical group to initiate the polymerization of the monomer having a polymerizable unsaturated group.

Specifically, it may, for example, be 2,2-azobisisobutyronitrile (hereinafter abbreviated as "AIBN"), 2,2-azobis-2-methylbutyronitrile (hereinafter abbreviated as "AMBN"), 2,2-azobis-2,4-dimethylvaleronitrile, benzoyl peroxide, diisopropyl peroxydicarbonate, acetyl peroxide, di-tert-butyl peroxide or a persulfate. Among them, AIBN or AMBN is preferred.

Such polymerization initiators may be used alone or in combination as a mixture of two or more of them.

The amount of the polymerization initiator to be used is preferably from 0.01 to 10 parts by mass per 100 parts by mass of the total of the polyol (X), the entire monomer having a polymerizable unsaturated group including the fluorinated monomer and a stabilizer or a graft agent to be used as the case requires (as described hereinafter).

The solvent may, for example, be an alcohol such as methanol, ethanol, isopropanol, butanol, cyclohexanol or benzyl alcohol; an aliphatic hydrocarbon such as pentane, hexane, cyclohexane or hexene; an aromatic hydrocarbon such as benzene, toluene or xylene; a ketone such as acetone, methyl ethyl ketone or acetophenone; an ester such as ethyl acetate or butyl acetate; an ether such as isopropyl ether, tetrahydrofuran, benzyl ethyl ether, acetal, anisole or methyl-tert-butyl ether; a halogenated hydrocarbon such as chlorobenzene, chloroform, dichloroethane or 1,1,2-trichlorotrifluoroethane; a nitro compound such as nitrobenzene; a nitrile such as acetonitrile or benzonitrile; an amine such as trimethylamine, triethylamine, tributylamine or dimethylaniline; an amide such as N,N-dimethylformamide or N-methylpyrrolidone; or a sulfur compound such as dimethyl sulfoxide or sulfolane.

Such solvents may be used alone or in combination as a mixture of two or more of them.

In a case where a solvent is used in the production of the polymer-dispersed polyol (A), the blend ratio of the solvent to the polyol (X) is preferably from 0:100 to 60:40, more preferably from 0:100 to 40:60, by mass ratio. When the blend ratio is within such a range, agglomeration of polymer particles will be suppressed, and it becomes possible to readily obtain a polymer-dispersed polyol (A) wherein polymer particles are stably dispersed.

After completion of the polymerization of the monomer having a polymerizable unsaturated group, the solvent is removed. The method for removing the solvent is carried out usually by heating under reduced pressure. Otherwise, it can be carried out by heating under normal pressure or at a normal temperature under reduced pressure. At that time, an unreacted monomer will be removed together with the solvent.

The polymerization reaction of the monomer having a polymerizable unsaturated group in the polyol (X) is carried out at a temperature of at least the decomposition temperature of the polymerization initiator, usually from 80 to 160°C, preferably from 90 to 150°C, particularly preferably from 100 to 130°C.

Further, in the present invention, a stabilizer or a graft agent may be used in order to improve the dispersion stability of polymer particles in the polymer-dispersed polyol (A).

A preferred one as such a stabilizer or a graft agent may, for example, be a compound having an unsaturated bond in its molecule. Specifically, it may, for example, be a high molecular weight polyol or monool obtained by reacting an alkylene oxide with an active hydrogen compound having an unsaturated bond-containing group such as a vinyl group, an allyl group or an isopropyl group as an initiator; a high molecular weight polyol or monool obtained by reacting an unsaturated carboxylic acid or an acid anhydride thereof, such as maleic anhydride, itaconic anhydride, maleic acid, fumaric acid, acrylic acid or methacrylic acid, with a polyol and then, adding an alkylene oxide such as propylene oxide or ethylene oxide, as the case requires; a reaction product of an unsaturated alcohol such as 2-hydroxyethyl acrylate or butenediol, another polyol and a polyisocyanate; or a reaction product of an unsaturated epoxy compound such as allyl glycidyl ether with a polyol.

Such a stabilizer or a graft agent may or may not have a hydroxyl group, but preferably has a hydroxyl group.

The stabilizer or the graft agent may be incorporated by mixing it together with the polyol (X), the monomer having a polymerizable unsaturated group and the polymerization initiator, etc.

After completion of the polymerization reaction, the obtained polymer-dispersed polyol (A) may be used as it is, as a material for rigid polyurethane foams, or the obtained polymer-dispersed polyol (A) may be used after removing an unreacted monomer by reduced pressure treatment of the polyol. Preferred is the latter.

In the preparation of the polyol component (Z), the blend ratio of the polymer-dispersed polyol (A) to the polyol for rigid polyurethane foams is such that the proportion of the polymer-dispersed polyol (A) in the polyol component (Z) is preferably at least 0.01 mass%, more preferably at least 0.05 mass%, further preferably at least 0.1 mass%. On the other hand, the proportion of the polymer-dispersed polyol (A) is preferably at most 5 mass%, more preferably at most 3 mass%.

Further, the proportion of polymer particles in the polyol component (Z) is preferably at least 0.0005 mass%, more preferably at least 0.001 mass%, further preferably at least 0.01 mass%. On the other hand, the proportion of polymer particles is preferably at most 1 mass%, more preferably at most 0.6 mass%.

When the proportions of the polymer-dispersed polyol (A) and the polymer particles in the polyol component (Z) are at least the lower limit values, respectively, when such a polyol component is formed into a rigid polyurethane foam, the dimensional stability will be improved. On the other hand, when they are at most the above upper limit values, the storage stability will be improved, and a rigid polyurethane foam can be constantly produced. Further, a proper viscosity as a polyol component (Z) can readily be obtained, and the solution stability will be improved.

The amount of water to be used as a blowing agent is preferably from 1 to 15 parts by mass, more preferably from 2 to 13 parts by mass, further preferably from 4 to 12 parts by mass, per 100 parts by mass of the polyol component (Z). When the amount of water is at least 1 part by mass, such is preferred from the viewpoint of weight reduction of the rigid polyurethane foam thereby obtainable. On the other hand, when the amount of water is at most 15 parts by mass, such is preferred since the mixing efficiency of water and the polyol component (Z) will be better.

In a case where one other than water is used as a blowing agent, when a hydrofluorocarbon compound is used as the one other than water, its amount is preferably from 1 to 50 parts by mass, more preferably from 20 to 40 parts by mass, per 100 parts by mass of the polyol component (Z).

When a hydrocarbon compound is used, its amount is preferably from 1 to 40 parts by mass, more preferably from 10 to 30 parts by mass, per 100 parts by mass of the polyol component (Z).

When an inert gas is used, its amount is preferably from 1 to 100 parts by mass, more preferably from 1 to 20 parts by mass, per 100 parts by mass of the polyol component (Z).

The amount of the surfactant is required to be suitably selected, but it is preferably from 0.1 to 10 parts by mass, per 100 parts by mass of the polyol component (Z).

The amount of the catalyst is preferably from 0.1 to 10 parts by mass, per 100 parts by mass of the polyol component (Z).

The amount of the polyisocyanate component is preferably from 50 to 300 by isocyanate index (INDEX).

Here, the isocyanate index (INDEX) is a value represented by 100 times the proportion of the number of isocyanate groups based on the total number of active hydrogen in the polyol component (Z) and other active hydrogen compounds.

In a polyurethane formulation wherein a urethane-bond-forming catalyst is used as the catalyst, the amount of the polyisocyanate component is preferably from 50 to 140, more preferably from 60 to 130, by isocyanate index.

Further, in a polyisocyanurate formulation (urethane-modified polyisocyanurate formuation) wherein a catalyst to promote a trimerization reaction of an isocyanate group is mainly used as the catalyst, the amount of the polyisocyanate component is preferably from 120 to 300, more preferably from 150 to 250, by isocyanate index.

The method for producing a rigid polyurethane foam in the present invention may be applied to various molding methods.

The molding methods include, for example, pour-in-place, continuous production of a board-stock and spray-blown foaming.

The pour-in-place is a method wherein a raw material for the rigid polyurethane foam is poured into and foamed in a frame of e.g. a mold. The continuously produced board-stock foam is a laminate having a rigid polyurethane foam sandwiched between a pair of sheet materials, which is to be used as a heat-insulating material for building use. The spray-blown foaming is one wherein a rigid polyurethane foam is applied by spraying.

Among the above ones, the method for producing a rigid polyurethane foam of the present invention is suitably applicable to the production of a poured urethane foam, a continuously-produced board-stock foam, a spray foamed product or the like.

As the described in the foregoing, according to the method for producing a rigid polyurethane foam of the present invention, it is possible to obtain a rigid polyurethane foam which has a low density and is excellent in dimensional stability. Further, when a mixture of the polymer-dispersed polyol and the polyol for rigid polyurethane foams, to be used, is stored, the storage stability is excellent, whereby the rigid polyurethane foam can be produced stably.

Further, according to the method for producing a rigid polyurethane foam of the present invention, a rigid polyurethane foam excellent in dimensional stability can be obtained with a small amount of the polymer-dispersed polyol to be used.

### EXAMPLES

Now, the present invention will be described in further detail with reference to Examples. However, it should be understood that the present invention is by no means restricted by such Examples. Production Examples 1, 2, 4 and 5 are working examples of the present invention, and Production Examples 3, 6 and 7 are comparative examples.

In the following Examples, the hydroxyl value was measured in accordance with JIS K1557 (1970 edition). The viscosity was measured in accordance with JIS K1557 (1970 edition). With respect to the concentration (solid content) of polymer particles, the charged amount of the monomer having a polymerizable unsaturated group was taken as the concentration (solid content) of polymer particles.

### EVALUATION OF POLYMER-DISPERSED POLYOL

In the blend ratios shown in Table 1, polymer-dispersed polyols F1 to F3 were produced by the following Production Examples 1 to 3.

The blend compositions at the time of the production of the polymer-dispersed polyols, the hydroxyl values (mgKOH/g), viscosities (mPa·s) and concentrations (solid content: mass%) of polymer particles of the obtained polymer-dispersed polyols F1 to F3 are, respectively, shown in Table 1.

In the blend compositions in Table 1, polyols D to G, and a monomer having a polymerizable unsaturated group (including macromonomer H), are represented by "g", and the polymerization initiator is represented by the value of "parts by mass" per 100 parts by mass of the total of polyol D to G and the entire monomer having a polymerizable unsaturated group (including macromonomer H in the case of Production Example 2).

### MATERIALS USED

### · POLYETHER POLYOL

Polyol D: A polyoxyalkylene polyol having an oxyethylene group content of 65 mass% in polyol D and a hydroxyl value of 48 mgKOH/g, prepared by using glycerin as an initiator and addition-polymerizing ethylene oxide to the glycerin and then addition-polymerizing a mixture of propylene oxide (PO) and ethylene oxide (EO) [PO/EO = 46.2/53.8 (mass ratio)] thereto.

Polyol E: A polyoxyalkylene polyol having an oxyethylene group content of 60 mass% in polyol E and a hydroxyl value of 28 mgKOH/g, prepared by using glycerin as an initiator, and addition-polymerizing ethylene oxide to the glycerin and then addition-polymerizing a mixture of propylene oxide (PO) and ethylene oxide (EO) [PO/EO = 48.0/52.0 (mass ratio)] thereto.

Polyol F: A polyoxyalkylene polyol having an oxyethylene group content of 0 mass% in polyol F and a hydroxyl value of 760 mgKOH/g, prepared by using ethylenediamine as an initiator, and addition-polymerizing only PO to the ethylenediamine.

Polyol G: A polyoxyalkylene polyol having an oxyethylene group content of 0 mass% in polyol G and a hydroxyl value of 650 mgKOH/g, prepared by using glycerin as an initiator, and addition-polymerizing only PO to the glycerin.

### · FLUORINATED MONOMER

Fluorinated monomer (f): A monomer represented by the following chemical formula (1-1) (manufactured by Asahi Glass Company, Limited) was used:

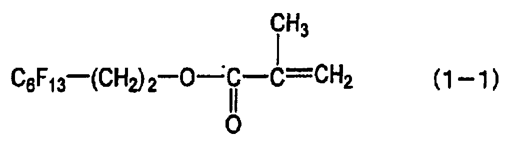

### · Styrene (manufactured by Godo Co., Ltd.)

### · OTHER MONOMERS HAVING POLYMERIZABLE UNSATURATED GROUPS

Acrylonitrile (manufactured by Junsei Chemical Co., Ltd.)

Vinyl acetate (manufactured by Junsei Chemical Co., Ltd.)

Macromonomer H: One obtained by the following preparation method.

### PREPARATION OF MACROMONOMER H

Into a 5 L separable flask, 3,000 g of polyol G, 149 g of a mixture of 2,4-isomer and 2,6-isomer of tolylene diisocyanate in a mass ratio of 80:20, and 111.3 g of hydroxyethyl methacrylate (manufactured by Junsei Chemical Co., Ltd.) were introduced and stirred at 60°C for one hour.

Then, the mixture was stirred at 80°C for 5 hours, whereupon disappearance of tolylene diisocyanate was confirmed by infrared spectroscopy (IR) (tradename: AVATAR360, manufactured by Nicolet), and macromonomer H was obtained. The obtained macromonomer H had a viscosity of 14,000 mPa·s at 25°C.

### · POLYMERIZATION INITIATOR

2,2-azobis-2-methylbutyronitrile (tradename: ABN-E, manufactured by Japan Hydrazine Co., Inc., hereinafter abbreviated as "AMBN")

### PRODUCTION OF POLYMER-DISPERSED POLYOLS

### Production Example 1: Production of polymer-dispersed polyol F1

Into a 5 L pressure reactor, a 70 mass% portion of polyol D was charged, and while maintaining the temperature at 120°C, a mixture of the remaining 30 mass% portion of polyol D, styrene, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed by deaeration under reduced pressure of 20 Pa at 120°C for 8 hours to prepare polymer-dispersed polyol F1. The results are shown in Table 1.

### Production Example 2: Production of polymer-dispersed polyol F2

Into a 5 L pressure reactor, a 70 mass% portion of polyol E was charged, and while the temperature was maintained at 120°C, a mixture of the remaining 30 mass% portion of polyol E, macromonomer H, styrene, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed by deaeration under reduced pressure of 20 Pa at 120°C for 6 hours to obtain polymer-dispersed polyol F2. The results are shown in Table 1.

### Production Example 3: Production of polymer-dispersed polyol F3

Into a 5 L pressure reactor, polyol D, polyol F, polyol G, acrylonitrile, vinyl acetate and the polymerization initiator (AMBN) were all charged, and then the temperature was raised with stirring, followed by a reaction for 10 hours while maintaining the reaction solution at 80°C. Upon confirming that the conversion of the monomer measured by the above mentioned method, was at least 80%, the reaction was terminated. Thereafter, an unreacted monomer was removed by deaeration under reduced pressure of 20 Pa at 110°C for 2 hours to obtain polymer-dispersed polyol F3. The results are shown in Table 1.

**TABLE 1**

| | Pro. Ex. 1 | Pro. Ex. 2 | Pro. Ex. 3 |
|---|---|---|---|
| Polyol D | 1170 | | 945 |
| Polyol E | | 1105 | |
| Polyol F | | | 900 |
| Polyol G | | | 905 |
| Fluorinated monomer (f) | 65 | 65 | |
| Acrylonitrile | | | 150 |
| Styrene | 65 | 65 | |
| Vinyl acetate | | | 600 |
| Macromonomer H | | 65 | |
| Polymerization initiator (parts by mass) | 0.5 | 0.5 | 0.9 |
| Hydroxyl value (mgKOH/g) | 46 | 30 | 320 |
| Viscosity (mPa·s) | 1660 | 1600 | 1500 |
| Concentration of polymer particles (solid content: mass%) | 10 | 10 | 20 |
| Name | F1 | F2 | F3 |

### EVALUATION OF RIGID POLYURETHANE FOAMS

In the blend ratios of Production Examples 4 to 7 as shown in Table 2, rigid polyurethane foams were prepared by the following method.

In the blend compositions in Table 2, units of the amounts of various materials used are "parts by mass".

### MATERIALS USED

### · Polyol component

Polyol A: A polyether polyol having a hydroxyl value of 350 mgKOH/g and a proportion of EO to the total of EO and PO being 33 mass%, obtained by using tolylene diamine as an initiator and addition-polymerizing EO, PO and EO in this order to the tolylene diamine.

Polyol B: A polyether polyol having a hydroxyl value of 350 mgKOH/g, prepared by using N-(2-aminoethyl)piperazine as an initiator and addition-polymerizing only EO to the N-(2-aminoethyl)piperazine.

Polyol C: A polyether polyol having a hydroxyl value of 380 mgKOH/g, prepared by using a mixture of sucrose and glycerin (mass ratio of 5:4) as an initiator and addition-polymerizing only PO to the mixture.

Polymer-dispersed polyols F1 to F3: Same as shown in Table 1.

PTFE powder: Polytetrafluoroethylene powder (tradename: Polytetrafluoroethylene Resin Powder fluon L-173, manufactured by Asahi Glass Company, Limited)
· Flame Retardant: tris(2-chloropropyl)phosphate (tradename: TMCPP, manufactured by DAIHACHI CHEMICAL INDUSTRY CO., LTD.)
· Blowing agent: water
· Surfactant: silicone surfactant (tradename: SZ-1671, manufactured by Dow Corning Toray Co., Ltd.)
· Catalyst: N,N,N',N'-tetramethylhexamethylene diamine (tradename: TOYOCAT-MR, manufactured by TOSOH CORPORATION)
· Polyisocyanate: polymethylene phenyl polyisocyanate (Crude MDI) (tradename: MR-200, manufactured by Nippon Polyurethane Industry Co., Ltd.)

### PRODUCTION OF RIGID POLYURETHANE FOAMS

Into a 1 L beaker, 100 parts by mass of the polyol component as identified in Table 2, 6 parts by mass of the blowing agent, 1 part by mass of the surfactant, 0.5 part by mass of the catalyst and 10 parts by mass of the flame retardant were, respectively, introduced, and they were well mixed by a stirrer to obtain a polyol system liquid.

The amount of the polyisocyanate used, was 110 by isocyanate index (INDEX).

The liquid temperature of both materials of the polyol system liquid and the polyisocyanate component was maintained at 20°C, followed by stirring and mixing at a rotational speed of 3,000 rpm for 5 seconds. Then, the mixture was put into a wooden box of 200x200x200 mm, and free foaming was carried out to form a rigid polyurethane foam.

### EVALUATION OF RIGID POLYURETHANE FOAMS

With respect to the rigid polyurethane foam obtained in each Production Example, the gel time (seconds), the box free density (unit: kg/m³) as the entire density, the compression strength (unit: MPa) and the high temperature shrinkage (unit: %) as dimensional stability, were respectively measured. Further, the following evaluation was carried out for storage stability. The results are shown in Table 2.

For the measurement of the gel time, a wire was inserted into the foam during foaming, and the time (seconds) until the foam gets stickly at the time when the wire was pulling out was measured.

The entire density (box free density) was measured in accordance with JIS K7222 (1998 Edition) and obtained from the mass and the volume.

The compression strength was measured in accordance with JIS A9511. The size of the test specimen was 5 cm × 5 cm × 5 cm. The compression strengths in the parallel direction (//) and the vertical direction (┴) to the gravity direction, were measured. In Table 2, "┴+//" represents the compression strength obtained by adding the compression strength in the parallel direction (//) and the compression strength in the vertical direction (┴).

### EVALUATION OF DIMENSIONAL STABILITY

The high temperature shrinkage was measured by a method in accordance with ASTM D 2126-75, and the high temperature dimensional stability and the wet heat dimensional stability were evaluated.

As a sample, the rigid polyurethane foam in each Example cut out in a size of 100 mm in length (Z) × 150 mm in width (X) × 75 mm in thickness (Y) was used.

The above test specimen was stored for 24 hours in an atmosphere of 70°C for the high temperature dimensional stability, or in an atmosphere of 70°C under a relative humidity of 95% for the wet heat dimensional stability, whereby the increased length (thickness) was represented by the dimensional change (unit: %) to the length (thickness) before the storage. Namely, the dimensional changes were measured under two conditions in three directions (X, Y and Z) i.e. in a total of six directions.

Here, in the dimensional change, a negative numerical value means shrinkage, and the absolute value being large means a large dimensional change. The dimensional change was evaluated by the following evaluation standards.

### Evaluation Standards

⊚: The maximum absolute value among dimensional changes in six directions was less than 1%.
○: The maximum absolute value among dimensional changes in six directions was at least 1% and less than 5%.
Δ: The maximum absolute value among dimensional changes in six directions was at least 5% and less than 10%.
×: The maximum absolute value among dimensional changes in six directions was at least 10%.

### EVALUATION OF STORAGE STABILITY

In the blend ratios of Production Examples 4 to 7 shown in Table 2, polymer-dispersed polyol F1 to F3 or PTFE powder was added to a mixture of polyols A to C to prepare a sample for evaluation.

And, the sample for evaluation was stored at 23°C for 3 days, and the appearance (separation state) of the sample for evaluation after the storage was visually observed, whereby the storage stability (23°C for 3 days) was evaluated by the following evaluation standards. Evaluation Standards
○: Clear and free from separation or turbidity
×: Separation or turbidity observed.

**TABLE 2**

| | | | Pro. Ex.4 | Pro. Ex.5 | Pro. Ex.6 | Pro. Ex.7 |
|---|---|---|---|---|---|---|
| Polyol component | Polyol A | | 40 | 40 | 40 | 40 |
| | Polyol B | | 20 | 20 | 20 | 20 |
| | Polyol C | | 39.9 | 39.6 | 35 | 39.9 |
| | Polymer-dispersed polyol | | F1 0.1 | F2 0.4 | F3 5 | |
| | PTFE powder | | | | | 0.1 |
| | Average hydroxyl value (mgKOH/g) | | 359 | 359 | 359 | 359 |
| Flame retardant | | | 10 | 10 | 10 | 10 |
| Blowing agent | | | 6 | 6 | 6 | 6 |
| Surfactant | | | 1 | 1 | 1 | 1 |
| Catalyst | | | 0.5 | 0.5 | 0.5 | 0.5 |
| Polyisocyanate | | | 194 | 194 | 194 | 194 |
| INDEX | | | 110 | 110 | 110 | 110 |
| Gel time (seconds) | | | 27 | 27 | 28 | 27 |
| Box free density (Kg/m³) | | | 23.4 | 23.3 | 22.3 | 22.4 |
| Compression strength (MPa) | | // | 0.15 | 0.13 | 0.13 | 0.15 |
| | | ┴ | 0.07 | 0.07 | 0.06 | 0.07 |
| | | //+┴ | 0.22 | 0.2 | 0.19 | 0.22 |
| (150 High temperature 70°C 24 hr | | X 0.1 mm) | 0.1 | 0.20 | 0.40 | 1.1 |
| | | Y (75 mm) | -0.1 | -0.1 | -0.1 | -0.10 |
| | | Z (100 mm) | 0 | 0.1 | 0.2 | 0.6 |
| Wet heat 70°C 95% 24 hr | | X (150 m) | 0.6 | 0.7 | 1.1 | 0.8 |
| | | Y (75 mm) | 0.4 | 0.4 | 0.3 | 0.7 |
| | | Z (100 mm) | 0.4 | 0.7 | 1.0 | 0.8 |
| Dimensional stability | | | ⊚ | ⊚ | ○ | ○ |
| Storage stability (23°C, 3 days) | | | ○ | ○ | ○ | × |

As is evident from the results shown in Table 2, it was confirmed that in the case of the rigid polyurethane foams of Production Examples 4 and 5 of the present invention, produced by using the polymer-dispersed polyols F1 and F2, the dimensional stability was better by an addition of a small amount of the polymer-dispersed polyol, as compared with the rigid polyurethane foam of Production Example 6 produced by using the polymer-dispersed polyol F3.

Further, it was found that when a mixture (a polyol mixture) of the polymer-dispersed polyol F1 or F2, and the polyol for rigid polyurethane foams, was stored, such a mixture was excellent in storage stability. Thus, it was confirmed that the rigid polyurethane foams of Production Examples 4 and 5 of the present invention can be produced constantly.

on the other hand, it was confirmed that the storage stability was poor when PTFE powder was used.

### INDUSTRIAL APPLICABILITY

By the method of the present invention, weight reduction can be attained, and a rigid polyurethane foam excellent in dimensional stability can be obtained. Further, the polymer-dispersed polyol to be used in the present invention has a good storage stability even when mixed with a polyol having a small molecular weight for rigid polyurethane foams. The method for producing a rigid polyurethane foam of the present invention is useful for the production of e.g. pour-in-place urethane foams, continuously produced board-stock foam or spray-blown foams.

The entire disclosure of Japanese Patent Application No. 2006-312814 filed on November 20, 2006 including specification, claims and summary is incorporated herein by reference in its entirety.

## Claims

1. A method for producing a rigid polyurethane foam, which comprises reacting a polyol component (Z) with a polyisocyanate component in the presence of a blowing agent, a surfactant and a catalyst, wherein the polyol component (Z) has an average hydroxyl value of from 200 to 800 mgKOH/g and contains the following polymer-dispersed polyol (A):
Polymer-dispersed polyol (A) being one having polymer particles dispersed in a polyol by polymerizing a monomer having a polymerizable unsaturated group in a polyol (X), wherein the polyol (X) contains a polyether polyol, and the monomer having a polymerizable unsaturated group contains a fluorinated acrylate or a fluorinated methacrylate, and styrene.

2. The method for producing a rigid polyurethane foam according to Claim 1, wherein the fluorinate acrylate or the fluorinated methacrylate is a monomer represented by the following formula (1): 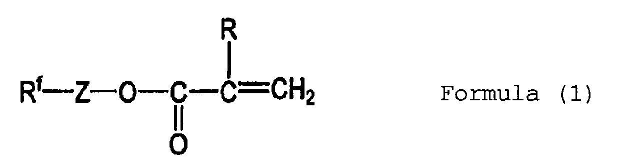 wherein R^{f} is a C₁₋₁₈ polyfluoroalkyl group, R is a hydrogen atom or a methyl group, and Z is a bivalent linking group.

3. The method for producing a rigid polyurethane foam according to Claim 1 or 2, wherein the proportion of styrene in the entire monomer having a polymerizable unsaturated group is from 30 to 70 mass%.

4. The method for producing a rigid polyurethane foam according to any one of Claims 1 to 3, wherein the polyether polyol has an oxyethylene content of at least 10 mass%.

5. The method for producing a rigid polyurethane foam according to any one of Claims 1 to 4, wherein the polyether polyol has a hydroxyl value of at most 84 mgKOH/g.

6. The method for producing a rigid polyurethane foam according to any one of Claims 1 to 5, wherein the polyether polyol is a polyoxyalkylene polyol obtained by addition-polymerizing propylene oxide and ethylene oxide to a polyhydric alcohol.

7. The method for producing a rigid polyurethane foam according to any one of Claims 2 to 6, wherein the proportion of the monomer represented by the formula (1) in the entire monomer having a polymerizable unsaturated group, is from 30 to 70 mass%.

8. The method for producing a rigid polyurethane foam according to any one of Claims 1 to 7, wherein the proportion of the polymer-dispersed polyol (A) in the polyol component (Z) is at least 0.01 mass%, and the proportion of the polymer particles in the polyol component (Z) is at least 0.0005 mass%.

9. The method for producing a rigid polyurethane foam according to any one of Claims 1 to 8, wherein as the blowing agent, water alone, or water and at least one member selected from the group consisting of a hydrofluorocarbon compound and a hydrocarbon compound, are used.
